# EUROPEAN PATENT APPLICATION

(11) **EP 2 642 555 A2**
(43) Date of publication of application: **25.09.2013**
(21) Application number: 12190178.9
(22) Date of filing: 26.10.2012
(51) Int. Cl.: H01M 2/16, H01M 4/13, H01M 4/505, H01M 4/525, H01M 10/0525

(54) **Positive electrode for a lithium ion secondary battery and a lithium ion secondary battery including the same**

(30) Priority: 21.03.2012 KR 20120028917
(71) Applicant: Samsung Corning Precision Materials Co., Ltd., Gyeongsangbuk-do 730-725 (KR)
(72) Inventor: Jo, Sung Nim, Chungcheongnam-Do 336-841 (KR); Cho, Hae In, Chungcheongnam-Do 336-841 (KR); Kim, Se Won, Chungcheongnam-Do 336-841 (KR); Choi, Shin Jung, Chungcheongnam-Do 336-841 (KR)
(74) Representative: Gulde Hengelhaupt Ziebig & Schneider

(57) **Abstract**

The present invention relates to a positive electrode for a lithium ion secondary battery sequentially including a positive electrode collector, a positive electrode active material layer able to insert/extract lithium ions, and a lithium ion conductive layer.

## Description

The present invention relates to a positive electrode for a lithium ion secondary battery and a lithium ion secondary battery including the same, and more particularly, to a positive electrode for a lithium ion secondary battery sequentially including a positive electrode collector, a positive electrode active material layer, and a lithium ion conductive layer, and a lithium ion secondary battery including the positive electrode.

### Description of the Related Art

Demands for a positive electrode material for a secondary battery having high safety, long lifetime, high energy density, and high power characteristics have been increase, as an application range of lithium ion secondary battery is extended from small electronic devices to electric vehicles and power storage.

Among positive electrode active materials used as a positive electrode material of a lithium ion secondary battery, spinel-type lithium manganese oxide is an environmentally friendly and highly safe positive electrode active material, because it does not include harmful heavy metals such as cobalt, and thus, spinel-type lithium manganese oxide is used in electric vehicles and power storage. However, since a decomposition reaction of an electrolyte due to the deintercalation of manganese ions at a high temperature may occur in spinel-type lithium manganese oxide, lifetime of the spinel-type lithium manganese oxide may rapidly decrease over a prolonged use at a high temperature.

Therefore, required is a technique for preparing a lithium metal oxide positive electrode and a battery stable at high temperatures and able to be used over a prolonged period of time by preventing contact between lithium metal oxide used as a positive electrode active material and an electrolyte.

### Summary of Invention

An aspect of the present invention provides a positive electrode for a lithium ion secondary battery able to prevent a side reaction between a positive electrode active material and an electrolyte and innovatively improve lifetime of the battery at high temperatures by introducing a solid lithium ion conductive layer capable of preventing interfacial contact between the positive electrode active material and the electrolyte and increasing mobility of lithium ions, and a lithium ion secondary battery including the positive electrode.

According to at least one of embodiments, a positive electrode for a lithium ion secondary battery sequentially includes a positive electrode collector, a positive electrode active material layer for intercalation and deintercalation of lithium ions, and a lithium ion conductive layer.

The lithium ion conductive layer may include one or more selected from the group consisting of sulfides, oxides, and phosphates. The sulfides may include one or more selected from the group consisting of Li₂S-P₂S₅-Li₄SiO₄, Li₂S-Ga₂S₃-GeS₂, and Li_{3.25}-Ge_{0.25}-P_{0.75}S₄. The oxides may include one or more selected from the group consisting of (La, Li)TiO₃, Li₃BO_{2.5}N_{0.5}, and Li₉SiAlO₈. The phosphates may include one or more selected from the group consisting of Li₁₊ₓAlₓGe₂₋ₓ(PO₄)₃, LiTiₓZr₂(PO₄)₃, LiAlZr(PO₄)₃, Li₁₊ₓTi₂₋ₓAlₓSi_{y}Ge₂₋ₓ(PO₄)_{3-y}, and Li_{0.8}La_{0.6}Zr₂(PO₄)₃.

The lithium ion conductive layer may be a polymer layer having a lithium salt solvated in poly(ethylene oxide) (PEO) added therein.

A thickness of the lithium ion conductive layer may be in a range of 100 nm or more to 1 µm or less.

The positive electrode active material layer may include one or more selected from the group consisting of LiMn₂O₄, LiMₓMn₂₋ₓO₄ (where M is one or more selected from the group consisting of nickel (Ni), zirconium (Zr), cobalt (Co), magnesium (Mg), molybdenum (Mo), aluminum (Al), and silver (Ag), and 0<x<2), and LiMₓMn₂₋ₓO_{4-z}F_{z} (where M is one or more selected from the group consisting of Ni, Zr, Co, Mg, Mo, Al, and Ag, and 0<x<2 and 0<z<4).

According to another embodiment, a lithium ion secondary battery includes the positive electrode of the present disclosure, an electrolyte, and a negative electrode.

### Brief Description of the Drawings

The accompanying drawings are included to provide a further understanding of the present disclosure, and are incorporated in and constitute a part of this specification. The drawings illustrate exemplary embodiments of the present disclosure and, together with the description, serve to explain principles of the present disclosure. In the drawings:

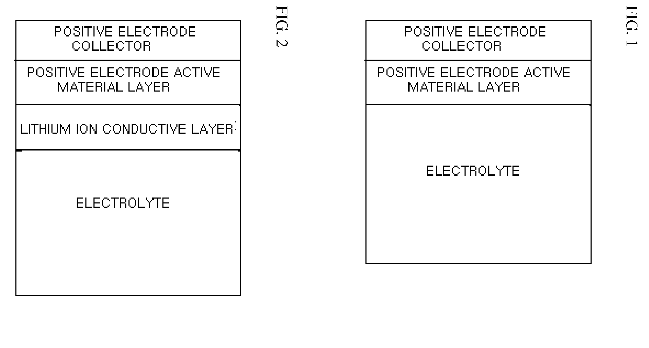

FIG. 1 schematically illustrates a lithium ion secondary battery including a typical positive electrode; and
FIG. 2 schematically illustrates a lithium ion secondary battery including a positive electrode according to the present disclosure.

### Detailed Description

Embodiments relate to a positive electrode for a lithium ion secondary battery sequentially including a positive electrode collector, a positive electrode active material layer able to insert/extract lithium ions, and a lithium ion conductive layer.

The positive electrode collector acts to collect electrons generated by electrochemical reactions of the positive electrode active material or to supply electrons required for the electrochemical reactions, and has electrical conductivity. Aluminum, stainless steel, nickel, titanium, or baked carbon may be used as the positive electrode collector.

The positive electrode collector is coated with a slurry obtained by mixing and dispersing lithium metal oxide, a conductive agent, and a binder in a solvent, and then the positive electrode active material layer may be prepared by drying the coated positive electrode collector.

Lithium metal oxide may be broadly classified as a layer type, a spinel type, and an olivine type according to the structure thereof. The layer-type oxide has a crystal structure, in which intercalation layers of lithium ions exist, and may be expressed by a chemical formula of LiMO₂ (where M is cobalt (Co), nickel (Ni), etc.). Electrochemical characteristics of the layer-type lithium metal oxide may be changed according to type and ratio of a transition metal exists in the crystal structure thereof. The spinel-type lithium metal oxide may have a composition of LiM₂O₄ (where M is manganese (Mn), Ni, etc.) and have a cubic crystal structure. Since the spinel-type lithium metal oxide has a three-dimensional crystal structure, a movement path of lithium ions is short and ionic conductivity is high. A typical spinel-type lithium metal oxide is LiMn₂O₄. The olivine-type lithium metal oxide has a very stable structure and high chemical stability, and a typical example thereof is LiFePO₄.

A spinel-type lithium metal oxide may be used as the positive electrode active material of the embodiment and in this case, the spinel-type lithium metal oxide may be LiMn₂O₄, may be lithium metal oxide having a chemical formula of LiMₓMn₂₋ₓO₄ (0<x<2) including a metal precursor, such as Ni, zirconium (Zr), Co, magnesium (Mg), molybdenum (Mo), aluminum (Al), and silver (Ag), in addition to Mn, and may be lithium metal oxide having a chemical formula of LiMₓMn₂₋ₓO_{4-z}F_{z} (0<x<2, 0<z<4) and having fluorine substituted therein. Also, the spinel-type lithium metal oxide may be a mixture thereof. In the present disclosure, a LiNi_{0.5}Mn_{1.5}O₄ spinel-type lithium metal oxide is used according to an embodiment.

In the positive electrode for a lithium ion secondary battery according to the embodiment, since a lithium ion conductive layer is formed on a positive electrode active material layer, the lithium ion conductive layer is positioned between a positive electrode active material and an electrolyte when a battery is formed, and thus, may play a role in increasing mobility of lithium ions as well as preventing interfacial contact between the lithium metal oxide and the electrolyte. Therefore, the positive electrode according to the embodiment may prevent a side reaction between the lithium metal oxide in the positive electrode active material layer and the electrolyte, and may innovatively improve lifetime of the battery at high temperatures.

The lithium ion conductive layer may include one or more selected from the group consisting of sulfides, oxides, and phosphates. Examples of the sulfides may be Li₂S-P₂S₅-Li₄SiO₄, Li₂S-Ga₂S₃-GeS₂, and Li_{3.25}-Ge_{0.25}-P_{0.75}S₄ (Thio-LISICON), having crystalline, amorphous, and partially crystalline characteristics and high ionic conductivity. Examples of the oxides may be (La, Li)TiO₃, Li₃BO_{2.5}N_{0.5}, and Li₉SiAlO₈, and examples of the phosphates may be Li₁₊ₓAlₓGe₂₋ₓ(PO₄)₃, LiTiₓZr₂(PO₄)₃, LiAlZr(PO₄)₃, Li₁₊ₓTi₂₋ₓAlₓSi_{y}Ge₂₋ₓ(PO₄)_{3-y}, and Li_{0.8}La_{0.6}Zr₂(PO₄)₃.

Also, a polymer layer having a lithium salt solvated in poly(ethylene oxide) (PEO) added therein may be used as the lithium ion conductive layer in addition to the foregoing. At this time, ionic conductivity may be changed according to the type of the solvated lithium salt. Examples of the lithium salt may be LiClO₄, LiCF₃SO₃, LiPF₆, LiBF₄, and LiN(CF₃SO₂)₂, and the lithium salt may be used alone or in combination thereof.

A thickness of the lithium ion conductive layer may be in a range of 100 nm or more to 1 µm or less. In the case that the thickness thereof is greater than 1 µm, power characteristics of the battery may be degraded due to the obstruction of the transfer of Li ions, and in the case that the thickness thereof is less than 100 nm, protection of the positive electrode may be insufficient and a preparation process may be complicated.

The positive electrode for a lithium ion secondary battery of the embodiment may be prepared in such a manner that coating of a positive electrode active material layer is performed on a positive electrode collector and the coated positive electrode active material layer is dried, and then coating of a lithium ion conductive layer is performed on the positive electrode active material thus formed.

In the embodiments, lithium metal oxide of the positive electrode active material layer may be prepared through a heat treatment after uniformly mixing a lithium compound, such as lithium carbonate (Li₂CO₃), with metal oxide.

The heat treatment may be performed through a calcination process at a temperature ranging from 700°C to 1000°C for 10 hours to 30 hours and for example, may be performed at a temperature ranging from 800°C to 900°C for 12 hours to 24 hours. The lithium metal oxide obtained after the heat treatment may be subjected to grinding and powder processes for additional particle size control and removal of impurities.

A positive electrode collector is coated with a slurry obtained by mixing and dispersing the obtained lithium metal oxide, a conductive agent, and a binder in a solvent, and dried, and then the positive electrode of the embodiment may be prepared by forming a lithium ion conductive layer on the positive electrode collector thus formed.

The binder functions to bond the active material and the conductive agent to be adhered to the electrode collector. A binder typically used in a lithium ion secondary battery, such as polyvinylidene fluoride, polypropylene, carboxymethyl cellulose, starch, hydroxypropyl cellulose, polyvinylpyrrolidone, tetrafluoroethylene, polyethylene, an ethylene-propylene-diene polymer (EPDM), polyvinyl alcohol, a styrene-butadiene rubber, and a fluoro rubber, may be used.

The conductive agent is not particularly limited so long as it does not cause chemical changes in the battery as well as having conductivity. For example, artificial graphite, natural graphite, acetylene black, Denka black, Ketjen black, channel black, lamp black, thermal black, conductive fibers such as carbon fibers or metal fibers, conductive metal oxides such as titanium oxide, and metal powders such as aluminum powder and nickel powder, may be used.

In the embodiments, a bonding force of the positive electrode active material layer may be increased by forming microscopic irregularities on a surface of the positive electrode collector and various shapes, such as film, sheet, foil, net, porous body, foamed body, and nonwoven fabric, may be used.

The embodiments provide a lithium ion secondary battery including the positive electrode prepared in the present disclosure, a negative electrode, and an electrolyte.

The lithium ion secondary battery may be prepared by inserting a porous separator between a positive electrode and a negative electrode, and introducing an electrolyte according to a typical method well known in the art.

In the lithium ion secondary battery of the present disclosure, a negative electrode active material typically used in the art, such as natural graphite, artificial graphite, carbon fibers, cokes, carbon black, carbon nanotubes, fullerenes, active carbon, and lithium metal or a lithium alloy, may be used. Stainless steel, nickel, copper, titanium, or an alloy thereof may be used as a negative electrode collector.

An organic electrolyte having a lithium salt dissolved in a non-aqueous organic solvent may be used as the electrolyte. The non-aqueous organic solvent acts as a medium in which ions involved in electrochemical reactions of the battery may transfer. Examples of the non-aqueous organic solvent may be ethylene carbonate, propylene carbonate, dimethyl carbonate, diethyl carbonate, methylpropyl carbonate, ethylpropyl carbonate, butylene carbonate, and acetonitrile, and the non-aqueous organic solvent may be used alone or in combination thereof. The lithium salt acts as a source of lithium ions and a lithium salt typically used in an electrolyte of a lithium ion secondary battery may be used.

The lithium ion secondary battery according to the present disclosure may further include a separator existing between the positive electrode and the negative electrode to prevent a short circuit between two electrodes. A separator typically used in a lithium ion secondary battery, for example, a polymer layer such as polyolefin, polypropylene, and polyethylene, a microporous film, a woven fabric, and a nonwoven fabric, may be used.

Hereinafter, the present disclosure will be described in more detail according to the following examples. However, the present disclosure is not limited thereto.

### Examples

### [Example 1]

Lithium carbonate (Li₂CO₃) and nickel manganese hydroxide (Ni_{0.25}Mn_{0.75}(OH)₂) were uniformly mixed at an equivalence ratio between Li and other metals of 1:2 and a mixture was heated at 850°C for 24 hours to synthesize a spinel-type LiNi_{0.5}Mn_{1.5}O₄ positive electrode active material having a particle diameter of 12 µm (based on D50). The synthesized positive electrode active material, a Denka black conductive agent, and a polyvinylidene fluoride (PVDF) binder were mixed at a ratio of 94:3:3, and an Al foil was coated with a mixture and then dried. Thereafter, Li_{3.25}-Ge_{0.25}-P_{0.75}S₄, sulfide of product thio-LISICON (lithium super ionic conductor), was dispersed in an N-methyl-2-pyrrolidone (NMP) solution and then the positive electrode active material layer was coated with the dispersed Li_{3.25}-Ge_{0.25}-P_{0.75}S₄ to a thickness of 1 µm and dried to prepare a positive electrode. A coin cell was prepared by using the obtained positive electrode, lithium metal as a negative electrode and a 1.3M LiPF₆ ethylene carbonate (EC)/dimethylene carbonate (DMC)/EC (=5:3:2) solution as an electrolyte.

### [Example 2]

Lithium carbonate (Li₂CO₃) and nickel manganese hydroxide (Ni_{0.25}Mn_{0.75}(OH)₂) were uniformly mixed at an equivalence ratio between Li and other metals of 1:2 and a mixture was heated at 850°C for 24 hours to synthesize a spinel-type LiNi_{0.5}Mn_{1.5}O₄ positive electrode active material having a particle diameter of 12 µm (based on D50). The synthesized positive electrode active material, a Denka black conductive agent, and a PVDF binder were mixed at a ratio of 94:3:3, and an Al foil was coated with a mixture and then dried. Thereafter, LiClO₄ was mixed with a poly(ethylene oxide) (PEO) polymer and then the positive electrode active material layer was coated with a mixture to a thickness of 1 µm and dried to prepare a positive electrode. A coin cell was prepared by using the obtained positive electrode, lithium metal as a negative electrode and a 1.3M LiPF₆ EC/DMC/EC (=5:3:2) solution as an electrolyte.

### [Example 3]

Lithium carbonate (Li₂CO₃) and nickel manganese hydroxide (Ni_{0.25}Mn_{0.75}(OH)₂) were uniformly mixed at an equivalence ratio between Li and other metals of 1:2 and a mixture was heated at 850°C for 24 hours to synthesize a spinel-type LiNi_{0.5}Mn_{1.5}O₄ positive electrode active material having a particle diameter of 12 µm (based on D50). The synthesized positive electrode active material, a Denka black conductive agent, and a PVDF binder were mixed at a ratio of 94:3:3, and an Al foil was coated with a mixture and then dried. Thereafter, Li₃BO_{2.5}N_{0.5} was dispersed in an NMP solution and then the positive electrode active material layer was coated with the dispersed Li₃BO_{2.5}N_{0.5} to a thickness of 1 µm and dried to prepare a positive electrode. A coin cell was prepared by using the obtained positive electrode, lithium metal as a negative electrode and a 1.3M LiPF₆ EC/DMC/EC (=5:3:2) solution as an electrolyte.

### [Example 4]

Lithium carbonate (Li₂CO₃) and nickel manganese hydroxide (Ni_{0.25}Mn_{0.75}(OH)₂) were uniformly mixed at an equivalence ratio between Li and other metals of 1:2 and a mixture was heated at 850°C for 24 hours to synthesize a spinel-type LiNi₀.₅Mn_{1.5}O₄ positive electrode active material having a particle diameter of 12 µm (based on D50). The synthesized positive electrode active material, a Denka black conductive agent, and a PVDF binder were mixed at a ratio of 94:3:3 and an Al foil was coated with a mixture and then dried. Thereafter, Li_{3.25}-Ge_{0.25}-P_{0.75}S₄, sulfide of product thio-LISICON (lithium super ionic conductor), was dispersed in an NMP solution, and then the positive electrode active material layer was coated with the dispersed Li_{3.25}-Ge_{0.25}-P_{0.75}S₄ to a thickness of 0.5 µm and dried to prepare a positive electrode. A coin cell was prepared by using the obtained positive electrode, lithium metal as a negative electrode and a 1.3M LiPF₆ EC/DMC/EC (=5:3:2) solution as an electrolyte.

### [Comparative Example 1]

Lithium carbonate (Li₂CO₃) and nickel manganese hydroxide (Ni_{0.25}Mn_{0.75}(OH)₂) were uniformly mixed at an equivalence ratio between Li and other metals of 1:2 and a mixture was heated at 850°C for 24 hours to synthesize a spinel-type LiNi_{0.5}Mn_{1.5}O₄ positive electrode active material having a particle diameter of 12 µm (based on D50). The synthesized positive electrode active material, a Denka black conductive agent, and a PVDF binder were mixed at a ratio of 94:3:3, and an Al foil was coated with a mixture and then dried. A coin cell was prepared by using the obtained positive electrode, lithium metal as a negative electrode and a 1.3M LiPF₆ EC/DMC/EC (=5:3:2) solution as an electrolyte.

Capacity retention ratios of the coin cells prepared in the foregoing Examples and Comparative Example were measured. A capacity retention ratio is a ratio represented by percentage (%) of a capacity measured when a 100th cycle of charge and discharge was terminated after repeating charge and discharge at a current density of 1C-rate (current density for discharging within about 1 hour) and at 55°C to a capacity in the first cycle. The results thereof are presented in Table 1.

**[Table 1]**

| Category | Capacity retention ratio (100 cycles, 55°C) |
|---|---|
| Example 1 | 97% |
| Example 2 | 80% |
| Example 3 | 90% |
| Example 4 | 94% |
| Comparative Example 1 | 70% |

As shown in Table 1, it may be understood that the lithium ion secondary batteries prepared by using the positive electrodes including a lithium ion conductive layer on a positive electrode active material layer may have capacity retention ratios higher than that of the battery including the positive electrode having no lithium ion conductive layer of Comparative Example 1, and thus, high-temperature lifetime characteristics were improved.

With respect to a positive electrode for a lithium ion secondary battery according to the present disclosure and a secondary battery using the positive electrode, high-temperature lifetime characteristics may be greatly improved and stability may be increased. Also, the secondary battery may be stably used at a high voltage of 4V or more, and a decrease in capacity due to continuous charge and discharge and gas generation or explosion risk due to electrolyte decomposition may be significantly reduced.

## Claims

1. A positive electrode for a lithium ion secondary battery sequentially comprising:
a positive electrode collector;
a positive electrode active material layer for intercalation, deintercalation, or intercalation and deintercalation of lithium ions; and
a lithium ion conductive layer.

2. The positive electrode for a lithium ion secondary battery of claim 1, wherein the lithium ion conductive layer comprises one or more selected from the group consisting of sulfides, oxides, and phosphates.

3. The positive electrode for a lithium ion secondary battery of claim 2, wherein the sulfides comprises one or more selected from the group consisting of Li₂S-P₂S₅-Li₄SiO₄, Li₂S-Ga₂S₃-GeS₂, and Li_{3.25}-Ge₀.₂₅-P₀.₇₅S₄.

4. The positive electrode for a lithium ion secondary battery of claim 2, wherein the oxides comprises one or more selected from the group consisting of (La, Li)TiO₃, Li₃BO_{2.5}N_{0.5}, and Li₉SiAlO₈.

5. The positive electrode for a lithium ion secondary battery of claim 2, wherein the phosphates comprises one or more selected from the group consisting of Li₁₊ₓAlₓGe₂₋ₓ(PO₄)₃, LiTiₓZr₂(PO₄)₃, LiTiₓZr₂(PO₄)₃, Li₁₊ₓTi₂-ₓAlₓSi_{y}Ge₂₋ₓ(PO₄)_{3-y}, and Li_{0.8}La_{0.6}Zr₂(PO₄)₃.

6. The positive electrode for a lithium ion secondary battery of claim 1, wherein the lithium ion conductive layer is a polymer layer having a lithium salt solvated in poly(ethylene oxide) added therein.

7. The positive electrode for a lithium ion secondary battery of claim 1, wherein a thickness of the lithium ion conductive layer is in a range of 100 nm or more to 1 µm or less.

8. The positive electrode for a lithium ion secondary battery of claim 1, wherein the positive electrode active material layer comprises one or more selected from the group consisting of LiMn₂O₄, LiMₓMn₂₋ₓO₄ (where M is one or more selected from the group consisting of nickel (Ni), zirconium (Zr), cobalt (Co), magnesium (Mg), molybdenum (Mo), aluminum (Al), and silver (Ag), and 0<x<2), and LiMₓMn₂₋ₓO_{4-z}F_{z} (where M is one or more selected from the group consisting of Ni, Zr, Co, Mg, Mo, Al, and Ag, and 0<x<2 and 0<z<4).

9. A lithium ion secondary battery comprising the positive electrode of any one of claims 1 to 8, an electrolyte, and a negative electrode.
